# DEMANDE DE BREVET EUROPEEN

(11) **EP 4 834 854 A1**
(43) Date de publication de la demande: **04.11.2026**
(21) Numéro de dépôt: 26175734.8
(22) Date de dépôt: 30.04.2026
(51) Int. Cl.: C02F 9/00, B01D 21/34, C02F 1/24, C02F 1/40, C02F 3/32

(54) **DISPOSITIF DE TRAITEMENT DES EAUX USÉES**

(30) Priorité: 30.04.2025 FR 2504605
(71) Demandeur: Biopura, 20170 Levie (FR)
(72) Inventeur: GRAZIANI, Frédérick, 20170 Levie (FR); AVRILLEAU, Pierre, 20170 Levie (FR)
(74) Mandataire: Hautier IP

(57) **Abrégé**

L'invention concerne un dispositif de traitement (1) destinée à dépolluer un flux d'eaux usées en amont de filtres végétalisés plantés, comprenant une cuve (1) présentant une enveloppe externe et comprenant au moins une entrée d'eau (1a), une première sortie (1c) d'eau, configurée pour permettre la sortie d'un flux traité, la cuve comprenant en outre une pluralité (10) de compartiments communiquant fluidiquement entre eux et configurés pour traiter le flux, en collectant des éléments solides, en retenant des déchets par dégrillage et au moins une partie de graisses, en collectant par sédimentation des boues, en évacuant hors de la cuve, une partie du flux lorsque celui-ci présente un débit (dₑ) supérieur à un débit nominal prédéfini (d_{d}), et en stockant une partie du flux et permettre son évacuation hors de la cuve au travers de l'au moins une première sortie.

## Description

### DOMAINE TECHNIQUE

La présente invention concerne le domaine du pré-traitement des eaux usées pour les stations d'épuration de 50 à 2000 équivalents habitants et particulièrement le pré-traitement des eaux usées avant injection vers des filtres plantés de macrophytes, désigné ci-après filtres végétalisés plantés. La présente invention concerne en particulier une cuve permettant le pré-traitement des eaux-usées avant injection vers des filtres végétalisés plantés.

### ETAT DE LA TECHNIQUE

Il existe plusieurs dispositifs de pré-traitement des eaux usées. Les dispositifs existants permettent généralement de retirer les éléments solides, mous ou graisseux présents dans les eaux usées. Ils permettent également de réaliser un comptage du volume des effluents entrant ou déviés vers le flux dérivé de la station.

Pour ce faire, plusieurs dispositifs réalisant au moins une de ces fonctions sont positionnés en série ou en parallèle en amont des bacs de filtres végétalisés plantés. Cet ensemble de dispositifs peut alors former un réseau de pré-traitement des eaux usées.

Un exemple de réseau de ce type est présenté dans le brevet français FR2974798. Dans ce document, en amont des bacs de filtres végétalisés plantés, les eaux usées sont épurées des éléments solides pouvant être présents.

Cependant, un réseau tel que celui présenté dans l'antériorité est relativement complexe à installer. Par ailleurs, il nécessite un temps d'installation significatif et implique un budget conséquent. En effet, afin de réaliser les différents types de filtrages nécessaires au pré-traitement, il faut positionner différents dispositifs et dans une configuration optimale pour permettre un traitement complet.

Ainsi, en pratique, on observe que cette solution n'est pas ou n'est que très peu déployée. Or, le traitement des eaux usées, en particulier par des filtres végétalisés plantés est une avancée considérable en termes de préservation de l'environnement.

Un objet de la présente invention est ainsi de proposer une solution afin de faciliter le pré-traitement des eaux usées et plus particulièrement des eaux usées avant injection vers des filtres végétalisés plantés.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation, on prévoit un dispositif de traitement destinée à dépolluer un flux d'eaux usées en amont de filtres végétalisés plantés de macrophytes présentant une surface unitaire, comprenant une cuve, caractérisé en ce que la cuve présente une enveloppe externe et comprend :
- au moins une entrée d'eau usée configurée pour se raccorder fluidiquement à au moins une canalisation de sorte à permettre une entrée d'un flux entrant d'eaux usées dans la cuve,
- au moins une première sortie d'eau, configurée pour permettre la sortie d'un flux, issu d'au moins une partie du flux entrant après son traitement au sein de la cuve,
la cuve comprenant en outre les éléments suivants situés à l'intérieur de l'enveloppe externe :
- une pluralité de compartiments communiquant fluidiquement entre eux et configurés pour traiter le flux entrant d'eaux usées, la pluralité de compartiments comprenant au moins :
   ∘ au moins un premier compartiment :
      • comprenant un fond, dit fond de sur-profondeur configurée pour collecter par gravité au moins une partie d'éléments solides présents dans le flux entrant,
      • comprenant au moins un dégrilleur configuré pour retenir des déchets présents dans le flux entrant,

   ∘ un dispositif de dérivation comprenant une deuxième sortie, dite de dérivation, configuré de sorte à :
      • permettre d'évacuer hors de la cuve, par l'au moins une deuxième sortie, une partie du flux entrant, dite flux de dérivation, lorsque le flux entrant présente un débit supérieur à un débit nominal prédéfini, et pour
      • laisser s'écouler au sein de la cuve, en aval du dispositif de dérivation un flux, dit, flux traité,
   ∘ un cinquième compartiment, dit compartiment de bâchée, configuré pour stocker une partie du flux traité et comprenant au moins un dispositif de chasse configuré de sorte à permettre l'évacuation hors de la cuve au travers de l'au moins une première sortie d'une bâchée formée d'une portion au moins du flux traité précédemment stocké dans le compartiment de bâchée.

Ainsi, la solution propose une solution facilitant le prétraitement des eaux usées. Plus précisément, elle facilite le traitement des eaux usées en amont de filtres végétalisés plantés. En effet, cette solution permet d'avoir un seul dispositif réalisant tout le circuit de prétraitement des eaux usées.

Par ailleurs, le dispositif de traitement nécessite un temps d'installation réduit. L'ensemble des compartiments de traitement sont rassemblés dans une seule cuve et donc dans une seule enveloppe. Cela permet de réduire non seulement le temps d'installation mais également les moyens à engager en amont pour cette installation. En termes de gros œuvres à réaliser en amont, seule la création d'un seul emplacement sera nécessaire contrairement aux dispositifs de l'art antérieur.

Avantageusement, le dispositif étant d'un seul tenant, cela permet également de réduire le budget d'une telle installation. Comme indiqué précédemment, les étapes d'installations sont simplifiées, ainsi des budgets moins conséquents sont nécessaires à l'installation du dispositif de traitement. L'utilisation d'un tel dispositif est alors facilitée et celui-ci pourrait être déployé de façon plus régulière. L'augmentation d'installation de ce type pourrait alors permettre une avancée considérable en termes de préservation de l'environnement.

La cuve comprend également un dispositif de mesure d'un paramètre du flux traité, le paramètre étant relatif à au moins l'un parmi un volume, un débit et une vitesse du flux traité. De préférence, le dispositif de mesure comprenant un canal présentant une direction principale d'extension s'étendant horizontalement est configuré pour canaliser le flux traité, le canal étant muni d'un capteur de mesure dudit paramètre.

Ainsi, l'invention permet de faciliter le comptage des eaux usées traitées et ainsi répondre aux exigences législatives. En effet, des dispositions législatives imposent aux communes de mesurer au moins le débit traité des eaux usées afin de répondre à des dispositions environnementales. La présence du dispositif de mesure dans le dispositif de traitement permet ainsi de simplifier le traitement des eaux usées.

De préférence, le canal est verticalement situé au-dessus d'au moins l'un desdits compartiments. Le positionnement du canal dans l'enveloppe externe de la cuve permet de simplifier le prétraitement tout en le rendant compact. Contrairement aux dispositifs de l'art antérieur où le canal est positionné soit en dehors des dispositifs de pré-traitement soit au-dessus de dispositif, le canal est selon l'invention positionné de sorte à optimiser l'encombrement du dispositif ainsi d'en faciliter par la suite l'installation.

De préférence, le canal est situé de sorte à être manuellement accessible depuis l'extérieur de l'enveloppe externe au travers d'une trappe portée par l'enveloppe externe.

Ainsi, l'invention permet de facilement accéder au dispositif de mesure permettant une maintenance et une utilisation du dispositif de traitement des eaux usées.

Selon un autre mode de réalisation, on prévoit un ensemble de dépollution d'eaux usées, comprenant un dispositif de traitement tel qu'indiqué ci-dessus, des canalisations, par exemple formant un réseau d'alimentation et un système de filtres végétalisés plantés dans un terrain, les canalisations étant configurées pour guider le flux traité en sortie du dispositif jusqu'au système de filtres végétalisés plantés.

Selon un autre aspect on prévoit un dispositif de traitement destiné à dépolluer un flux Fe d'eaux usées en amont de filtres végétalisés plantés de macrophytes présentant une surface unitaire (S2), comprenant une cuve (1) qui comprend :
- au moins une entrée (1a) d'eau usée configurée pour se raccorder fluidiquement à au moins une canalisation de sorte à permettre une entrée d'un flux entrant (Fe) d'eaux usées dans la cuve (1),
- au moins une première sortie d'eau (1c), configurée pour permettre la sortie d'un flux Ft, correspondant à au moins une partie du flux entrant (Fe) après son traitement au sein de la cuve (1). La cuve (1) comprend en outre les éléments suivants situés à l'intérieur de l'enveloppe externe :
   ∘ un premier compartiment (11) comprenant un fond, dit fond de sur-profondeur (111) configurée pour collecter par gravité au moins une partie d'éléments solides présents dans le flux entrant (Fe), et comprenant une entrée (11a) correspondant à l'entrée (1a) d'eau usée et une sortie (11b).
   ∘ un deuxième compartiment (12. 12') comprenant au moins un dégrilleur (121, 121') configuré pour retenir des déchets présents dans le flux entrant (Fe), une entrée (12a) correspondant à la sortie (11b) du premier compartiment (11). Optionnellement une première sortie (12b) étant fermée par un clapet (12b1) et une deuxième sortie (12c) étant fermée par un clapet (12c1), si l'un parmi les clapets de la première et deuxième sorties est ouvert l'autre est fermé, de façon à diriger le flux entrant (Fe) vers un compartiment différent suivant le traitement à réaliser :
   ∘ optionnellement un troisième compartiment (13) comprenant une entrée (13a) correspondant à la deuxième sortie (12c) du deuxième compartiment (12. 12'). Le troisième compartiment (13) optionnel étant configuré pour retenir au moins une partie de graisses présentes dans le flux entrant (Fe) et optionnellement pour collecter par sédimentation des boues du flux entrant (Fe),
   ∘ un quatrième compartiment (14) constituant un dispositif de dérivation (14) comprenant optionnellement une première entrée (14a) correspondant à la sortie du troisième compartiment (13) et optionnellement une deuxième entrée (14b) correspondant à une sortie (12b) du deuxième compartiment (12. 12'). Optionnellement une première sortie consistant en une bague (141d) et une deuxième sortie (1b), dite de dérivation,
   ∘ un dispositif de mesure (141) d'un paramètre du flux traité (Ft), le paramètre étant relatif à au moins l'un parmi un volume, un débit et une vitesse du flux traité (Ft), le dispositif de mesure (141) comprenant un canal (141c), le canal (141c) étant muni d'un capteur (143) de mesure dudit paramètre, le canal (141c) présentant une direction principale d'extension (E) s'étendant horizontalement entre une entrée (141a) présentant optionnellement une forme tubulaire permettant l'accroche de ladite bague (141d) et une sortie (141b). Le dispositif de mesure étant configuré pour canaliser un flux dit flux traité (Ft), l'entrée (141a) présentant optionnellement une obstruction de diamètre de sorte à ne laisser passer le flux traité (Fi) que iusqu'à hauteur d'un débit nominal prédéfini (dd ), de telle sorte que le flux traité (Fi) est égal au flux entrant (Fe) lorsqu'il est inférieur au débit nominal prédéfini (dd), tandis que si le flux entrant (Fe) est supérieur au débit nominal prédéfini (dd), le flux traité (Ft) est égal au débit nominal prédéfini (dd), et le reste du flux (Fe - dd) est dirigé via un déversoir (142) vers la deuxième sortie (1d) dite de dérivation du quatrième compartiment (14),
   ∘ un cinquième compartiment (15), dit compartiment de bâchée, comprenant une entrée (15a) correspondant à la sortie (141b) du dispositif de mesure (141) configuré pour stocker le flux traité (Ft) et comprenant au moins un dispositif de chasse (151) configuré de sorte à permettre l'évacuation hors de la cuve (1) au travers de l'au moins une première sortie (1c) d'une bâchée formée d'une portion au moins du flux traité (Ft) précédemment stocké dans le compartiment de bâchée.

La cuve (1) présente une enveloppe externe, les compartiments (11, 12, 12', 13, 14, 15) et le dispositif de mesure (141) sont situés à l'intérieur de l'enveloppe externe de la cuve (1), et le canal (141c) est verticalement situé au-dessus d'au moins l'un desdits compartiments (11, 12, 12', 13, 14, 15) et de sorte à être manuellement accessible depuis l'extérieur de l'enveloppe externe au travers d'une trappe (1413) portée par l'enveloppe externe.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1A et 1B représentent des vues en perspective de l'extérieur de l'invention selon un mode de réalisation.
La figure 2 représente une vue en perspective de l'intérieur de l'invention selon un mode de réalisation.
Les figures 3A à 3C représentent respectivement une vue d'en haut, une vue suivant une coupe longitudinale et une vue suivant une coupe latérale de l'invention suivant un mode de réalisation.
La figure 4 représente une vue en perspective d'une partie de l'invention selon un mode de réalisation.
Les figures 5A et 5B représentent des vues détaillées du dispositif venturi positionné en suspension dans l'invention selon un mode de réalisation de l'invention.
La figure 6 représente une vue de positionnement de l'invention dans un système de traitement complet des eaux usées.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le canal est un assemblage vissé entre un canal d'approche et un canal venturi.

Ainsi, le canal est d'un seul tenant et permet de simplifier l'installation du dispositif de mesure dans le dispositif de traitement.

Selon un exemple, le canal est rapporté sur une structure de la cuve.

Selon un exemple, les compartiments de la pluralité de compartiments communiquent fluidiquement entre eux et sont configurés pour traiter le flux entrant Fe d'eaux usées depuis l'au moins une entrée jusqu'à l'au moins une première sortie d'eau.

Selon un exemple, la cuve comprend au moins une patte fixée à la cuve. De préférence, la cuve comprend plusieurs pattes.

Les pattes peuvent par exemple être configurées pour le maintien de l'enveloppe.

Selon un exemple, le canal étant configuré pour être fixé sur au moins une patte.

Ainsi, l'installation du dispositif de mesure dans le dispositif de traitement est facilitée.

Selon un exemple, le dispositif de mesure comprend au moins un système de réglage configuré pour permettre un réglage de l'inclinaison du canal par rapport à un plan horizontal.

La mesure doit être réalisée dans un plan parallèle par rapport au sol, ainsi le dispositif de mesure doit être positionné dans un plan parallèle au sol et donc horizontal. Ainsi, le système de réglage permet de faciliter le positionnement et donc le réglage du dispositif de mesure dans le dispositif de traitement.

Selon un exemple, le système de réglage est configuré pour permettre un réglage par un opérateur, manuellement ou avec un outil manipulé par l'opérateur.

Ainsi, le réglage de l'horizontalité est facilité. Cela permet à l'opérateur de réaliser le réglage plus rapidement.

Selon un exemple, le système de réglage est accessible par un opérateur situé à l'extérieur de la cuve. De préférence, le système de réglage est accessible par un opérateur situé à l'extérieur de l'enveloppe externe.

De préférence, le système de réglage est accessible par un opérateur situé sur une face externe de l'enveloppe, par exemple une face supérieure de l'enveloppe. De préférence, le système de réglage est accessible en soulevant la trappe.

Ainsi, l'opérateur n'a pas besoin de s'introduire dans la cuve pour régler le dispositif de mesure. Cela facilite ainsi le positionnement du dispositif de mesure.

De préférence, le système de réglage est configuré de sorte à permettre un réglage de l'inclinaison du canal après fixation du canal à la cuve.

Ainsi, par exemple, si après la fixation des défauts d'horizontalité sont observées par l'opérateur, ce dernier peut alors effectuer les réglages nécessaires facilement.

Selon un exemple, le dispositif de mesure comprend une interface de lecture de valeurs mesurées par le capteur.

De préférence, l'interface de lecture est positionnée de sorte à être lisible par un opérateur situé à l'extérieur de l'enveloppe externe, de préférence au travers d'une trappe portée par l'enveloppe externe.

Cela permet une lecture facile des mesures et donc facilite le relevé des données du dispositif de traitement des eaux usées.

Selon un exemple, le canal du dispositif de mesure comprend une portion, dite venturi, configurée pour créer un effet venturi lors de l'écoulement du flux traité dans le canal.

Ainsi, cela permet d'avoir un débit mesurable facilement dans le dispositif de mesure.

Selon un exemple, le capteur est situé dans la portion venturi.

Ainsi, cela permet de mesurer facilement le débit traité. En effet la portion venturi est la dernière zone avant le compartiment de stockage des eaux usées traitées.

Selon un exemple, le dispositif de mesure est situé en amont de l'au moins une première sortie. Cela permet de maitriser, voire de mesurer le débit du flux traité par rapport au flux entrant.

Selon un exemple, le flux entrant est traité dans le premier compartiment puis est intégralement dirigée vers le dispositif de dérivation. Si le flux d'eau entrant Fe est inférieur au débit nominal prédéfini dd, alors l'intégralité du flux traité s'écoule à travers le dispositif de dérivation vers le canal. Si le flux d'eau entrant Fe est supérieur au débit nominal prédéfini dd, alors :
- le canal accepte un flux d'eau traitée FT dont le débit est dd, et
- la partie en excès (débit du flux entrant Fe - dd) est évacuée hors du dispositif via la deuxième sortie d'eau 1b, dite de dérivation, qui fait office de déversoir.

L'eau passant à travers le canal est dirigée vers le cinquième compartiment.

Si le débit du flux entrant Fe est inférieur ou égal au débit nominal dd, alors l'intégralité du flux entrant Fe s'écoule depuis le dispositif de dérivation dans le canal.

Selon un exemple, le dispositif de chasse est configuré pour admettre une position fermée pour stockée le flux traité dans le compartiment de bâchée. Le dispositif de chasse peut également être configuré pour admettre une position ouverte pour relâcher le flux traité hors du compartiment de bâchée en direction de la première sortie.

Selon un exemple, le dispositif de chasse et la première sortie étant configurés de sorte que dans la position ouverte le flux traité soit évacué hors de la cuve avec un débit, dit de bâchée, d_{b} tel que d_{b} ≥ X * S2, avec X ≥ 0,5, de préférence X≤1.

Cela permet ainsi d'imbiber ou d'hydrater de façon uniforme l'ensemble du volume des filtres végétalisés plantés. Le filtrage effectué par les plantes sera alors plus efficace. Le dispositif de traitement permet ainsi de faciliter le traitement des eaux usées.

Selon un exemple, un volume V_{d} de flux traité est relâché lors d'une bâchée. De préférence, le volume V_{d} relâché lors d'une bâchée est compris entre 0,02 x S2 et 0,05 x S2.

Selon un exemple, le dispositif de chasse comprend au moins un flotteur, le dispositif de chasse étant configuré pour évacuer automatiquement le flux traité lorsque le flotteur atteint une hauteur prédéterminée, dite hauteur de seuil.

Le dispositif de traitement facilite le traitement des eaux usées en permettant automatiquement ou manuellement une répartition du flux traités au sein des bacs de filtres plantés présents dans la station d'épuration.

Selon un exemple, le dispositif comprend au moins un troisième compartiment configuré pour retenir au moins une partie de graisses présentes dans le flux entrant et collecter par sédimentation des boues présentes dans le flux entrant.

Ainsi, les graisses et les boues peuvent être collecter et retenue de façon simple sans utilisation de dispositif mécanique, électrique ou électronique.

Selon un exemple, l'au moins un troisième compartiment comprend un dispositif de bullage configuré pour introduire des bulles d'air dans le flux entrant de sorte à mettre en suspension dans l'au moins un troisième compartiment une partie de graisses présentes dans le flux entrant. Ainsi, les graisses présentes dans le flux entrant peuvent être récupérées facilement pour un traitement efficace des eaux usées.

Selon un exemple, l'au moins un troisième compartiment comprend un plancher incliné destiné à diriger les boues vers un système d'évacuation des boues.

Ainsi, les boues présentent dans les eaux usées s'accumulent par sédimentation sur le plancher incliné et peuvent être évacuée facilement de la cuve par le système d'évacuation des boues. Selon un exemple, l'au moins un premier compartiment comprend un deuxième compartiment comprenant au moins un dégrilleur configuré pour retenir des déchets présents dans le flux entrant.

Ainsi, le deuxième compartiment peut comprendre une grille permettant de retenir les déchets et accessible par un opérateur qui peut les retirer par le dessus de la cuve.

Selon un exemple, l'au moins un premier compartiment comprend un deuxième compartiment additionnel comprenant au moins un deuxième dégrilleur, de préférence automatique, configuré pour retenir des déchets présents dans le flux entrant.

Ainsi, si la cuve est reliée à un système électrique le dégrilleur automatique pourra facilement retirer les déchets présents dans le flux entrant des eaux usées soit sur cadence de fonctionnement soit sur détection de niveau haut en amont. Les refus de dégrillage pourront soit être dirigés vers un compacteur automatique soit être éjectés directement dans une poubelle. Avec ou sans compacteur, la configuration de l'ouvrage permet de placer la poubelle sur un caillebotis permettant aux égouttures de retourner dans la suite du traitement. L'opérateur n'aura plus qu'à retirer la poubelle pour l'évacuer du site, facilitant ainsi son travail d'exploitation. Selon un exemple le dispositif de traitement de traitement comprend tous les compartiments décrits ci-dessus. Selon un exemple alternatif, il ne comprend que certains des compartiments. Par exemple il peut ne comprendre que le premier et le cinquièmes compartiments. Par exemple il peut ne comprendre que le premier, le deuxième et le cinquièmes compartiments.

Le dispositif de dérivation est configuré de sorte à laisser s'écouler au sein de la cuve, en aval du dispositif de dérivation un flux et en direction de l'au moins une première sortie, le flux traité. Typiquement, le dispositif de dérivation est configuré de sorte à laisser s'écouler le flux traité, en aval du dispositif de dérivation, dans le cinquième compartiment.

Le cinquième compartiment est configuré pour stocker une partie du flux traité provenant du dispositif de dérivation.

Selon un exemple, le dispositif de dérivation est situé fluidiquement en aval du premier compartiment. Il reçoit un débit correspondant à celui du flux entrant. Il peut être alimenté directement par le premier compartiment. Il peut aussi être alimenté par un éventuel deuxième compartiment et/ou un éventuel troisième compartiment positionné en aval du premier compartiment et en amont du dispositif de distribution.

Selon un exemple, le cinquième compartiment est situé fluidiquement en aval du dispositif de dérivation. Il est alimenté par le dispositif de dérivation. Il reçoit un débit correspondant à celui du flux traité, c'est-à-dire un débit correspondant au flux entrant moins l'éventuel flux de dérivation. Si le dispositif comprend un troisième compartiment, ce troisième compartiment est situé fluidiquement en aval du premier compartiment. Il est alimenté par le premier compartiment. Ce dernier comprend éventuellement un premier et un deuxième compartiment. Ce troisième compartiment reçoit un débit correspondant à celui du flux entrant.

Selon un exemple, la cuve est configurée pour être d'un seul tenant. Ainsi, son installation est facilitée et l'utilisation d'un dispositif de traitement des eaux usées en amont de filtres végétalisés plantés est facilité.

Selon un exemple, la cuve est parallélépipédique ou cylindrique. Cela permet de faciliter la réalisation des travaux d'installation tout en facilitant l'installation de la cuve en elle-même par la suite. Selon un exemple, l'enveloppe externe de la cuve est parallélépipédique ou cylindrique. Selon un exemple une face supérieur de la cuve est en partie formée de trappes. Ces trappes permettent à un opérateur d'accéder à au moins un compartiment. De préférence, ces trappes permettent à un opérateur d'accéder à l'ensemble des compartiments.

Selon un exemple, la cuve est en polyéthylène, en métal ou en fibre de verre. Cela permet d'avoir un dispositif de traitement solide résistant aux forces, telles que celles de la terre pouvant entourer la cuve lorsque celle-ci est enterrée.

Selon un exemple, le compartiment de bâchée, la première sortie, les canalisations et le système de filtres végétalisés plantés sont configurés de sorte que lors de l'ouverture du dispositif de chasse le volume d'eau contenu dans le compartiment de bâchée se répartisse sur au moins 70% et de préférence sur au moins 90% du système de filtres végétalisés plantés.

Selon un exemple, le canal comprend un premier canal dit canal venturi, le canal venturi étant dimensionné pour générer un effet venturi sur le flux traité. Le canal venturi est ainsi dimensionner de sorte à permettre la mesure du débit du flux traité. Le canal venturi peut également être dimensionner de sorte à permettre la régulation du flux traité.

Selon un exemple, le canal comprend un deuxième canal dit canal d'approche, le canal d'approche comprenant une première extrémité et une deuxième extrémité, opposée à la première extrémité, la première extrémité étant reliée fluidiquement au dispositif de dérivation et la deuxième extrémité étant reliée fluidiquement au canal venturi. Le canal d'approche permet, lorsque le débit est supérieur à un débit nominal prédéfini, de rediriger le flux vers une deuxième sortie le flux de dérivation.

Selon un exemple, la cuve comprend au moins une patte fixée à la cuve, le canal étant configuré pour être fixé sur au moins une patte, l'au moins une patte étant réglable en hauteur de sorte à permettre une inclinaison du canal venturi par rapport à un plan horizontal. Cela permet ainsi de régler l'horizontalité du canal, mais surtout du canal venturi.

Selon un exemple, l'au moins une patte comprend une première portion solidaire de la cuve, une deuxième portion solidaire du canal et configurée pour être fixée à la première portion, la position de la première portion par rapport à la deuxième portion étant réglable, par exemple par l'intermédiaire de trous oblong portés par l'une parmi la première ou la deuxième portion et de boulons, le canal étant de préférence configuré pour être fixé sur au moins une patte. Cela permet de régler facilement l'inclinaison du canal pour qu'il soit parfaitement horizontal. De plus, cela permet de fixer le canal à l'intérieur de la cuve tout en étant suspendue à l'intérieure de celle-ci. Ainsi, l'ensemble est dimensionné de sorte que le flux traité (Ft) se répartisse sur une grande surface du système de filtres végétalisés plantés pour être filtré efficacement par ce dernier. Selon un exemple, le dispositif de traitement, les canalisations et le système de filtres végétalisés plantés sont dimensionnés pour filtrer le flux traité et pour que le système de filtres végétalisés plantés permette entièrement son absorption par le terrain.

Ainsi, l'ensemble est dimensionné de sorte que le flux traité s'écoule au moins en partie via les canalisations jusqu'aux systèmes de filtres végétalisés plantés.

Dans le cadre de la présente description le terme eaux usées s'entend comme les eaux altérées par l'activité humaine qu'elles soient domestiques, industrielles, agricole, pluviales et/ou de ruissellement.

Dans le cadre de la présente description, le terme dépolluer englobe les actions permettant de réduire, voire d'éliminer la pollution d'un flux liquide. En particulier, la dépollution permet de réduire, au moins de 95% la quantité de déchets flottants et/ou de déchets solides dont la taille est supérieure à 20mm voire moins selon le choix de la maille du dégrilleur automatique et selon la présence ou non de biodisques dans la suite du traitement.

Pour autant, en sortie d'une cuve de traitement, le flux ne présente pas nécessairement la qualité permettant de le réinjecter directement dans le milieu naturel.

Dans le cadre de la présente description, les termes amont et aval s'entendent relativement à la circulation du fluide depuis l'entrée jusqu'à l'au moins une première sortie lors d'un fonctionnement normal de la cuve, c'est-à-dire lors d'un traitement d'eaux usées.

Dans la présente description, la cuve est configurée de sorte que l'écoulement du flux d'un compartiment à l'autre s'effectue par gravité, de préférence uniquement par gravité. Ainsi, de préférence, il n'y a pas de pompe à l'intérieur de la cuve pour mettre le flux en circulation. Mais dans le cas où les surfaces plantées seraient à une altitude supérieure à celle de la cuve, les clapets de répartition du flux pourront être remplacés par des pompes de relevage.

De plus, les compartiments de la pluralité de compartiments sont séparés les uns des autres, par exemple par une paroi.

Dans la présente description, la cuve comprend au moins un premier, un deuxième, etc., compartiment. Le dénombrement des compartiments s'entend comme des noms donnés aux compartiments et n'indiquent pas nécessairement l'ordre des compartiments.

Dans la présente description le terme dégrilleur automatique s'entend comme une grille, par exemple d'entrefer 20 mm (millimètres), le niveau d'eau présent dans le compartiment monte jusqu'à atteindre une sonde résistive qui déclenche par la suite le démarrage d'un moteur actionnant une chaine d'entrainement d'un peigne venant racler la grille pour ensuite amener les refus de dégrillage hors du compartiment. Le démarrage du moteur peut également se faire sur cadence horaire.

Dans le cadre de la présente description, les termes défini, prédéfini ou prédéterminé s'entendent comme étant des valeurs définies en amont de l'utilisation du dispositif. Ces valeurs peuvent être définies en fonction de paramètres ou de réglementations. Par exemple, lorsque l'on parle de débit défini, on entend un débit défini par des réglementations. Par exemple, lorsque l'on parle de volume défini, on entend un volume défini pour avoir un arrosage efficace et optimal suivant les conditions finales.

Avec un objectif de respect de l'environnement, les communes françaises ont l'obligation de traiter leurs eaux usées. Toujours dans un souci d'écologie, ce traitement peut être réalisé au travers d'un réseau menant à des filtres végétalisés plantés. Ce réseau est complexe, couteux et consommateur de foncier. Les communes se dirigent ainsi en général vers des dispositifs énergivores permettant la compacité du traitement.

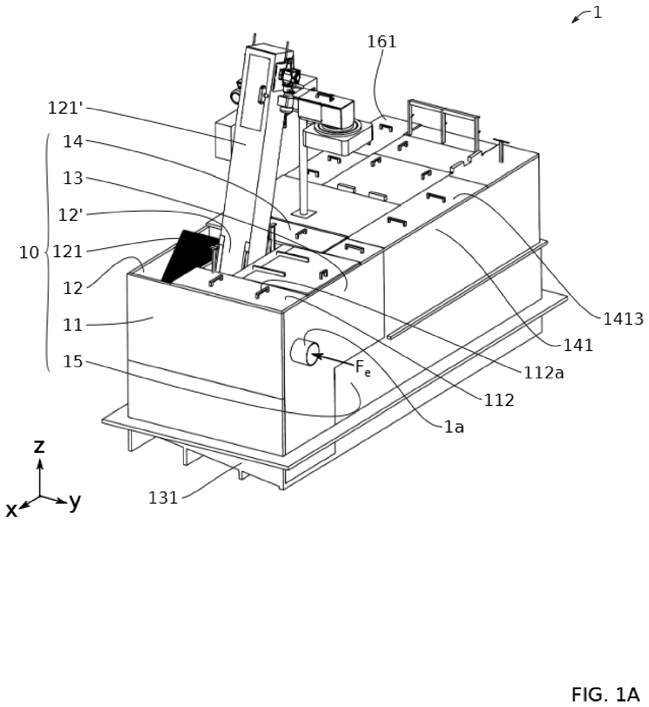

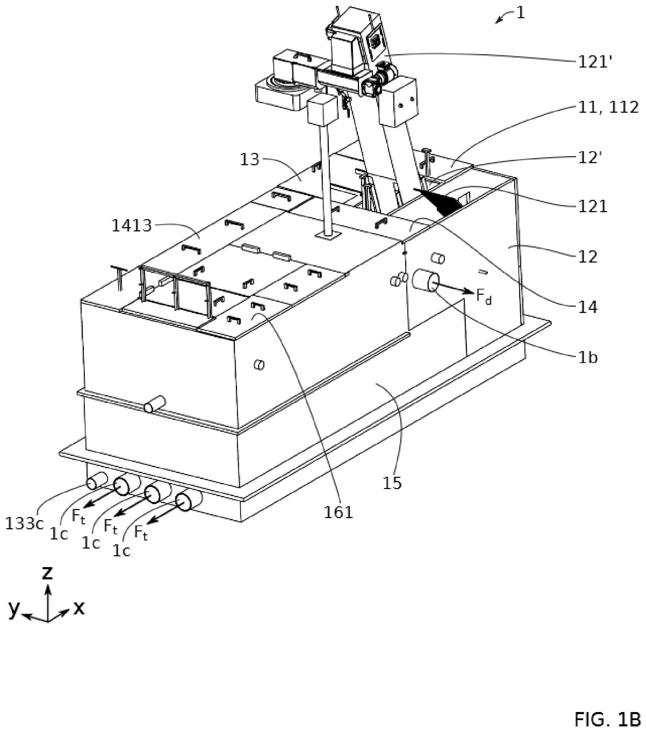

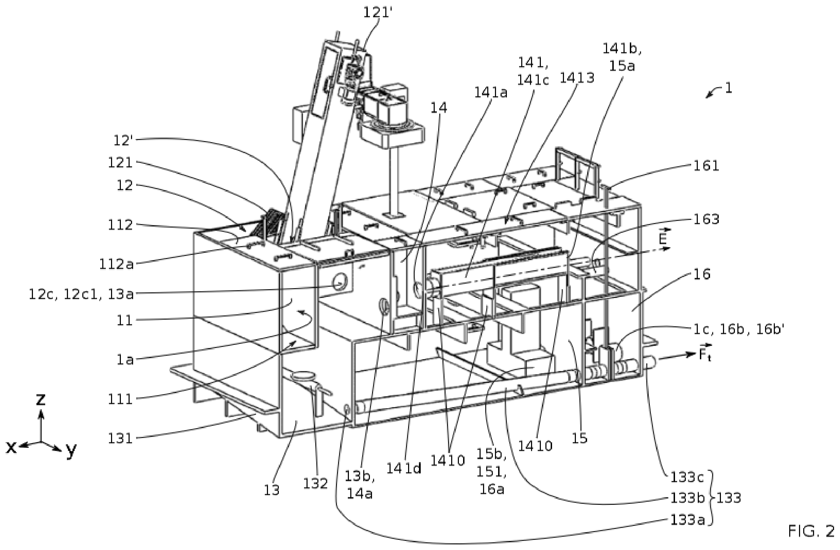

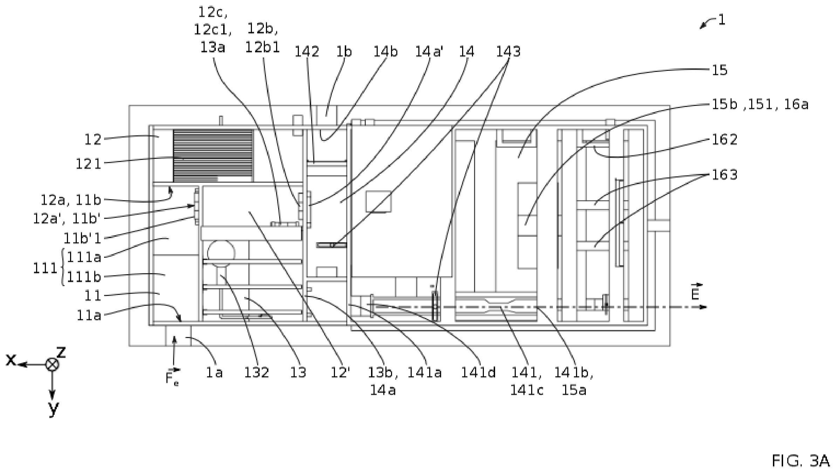

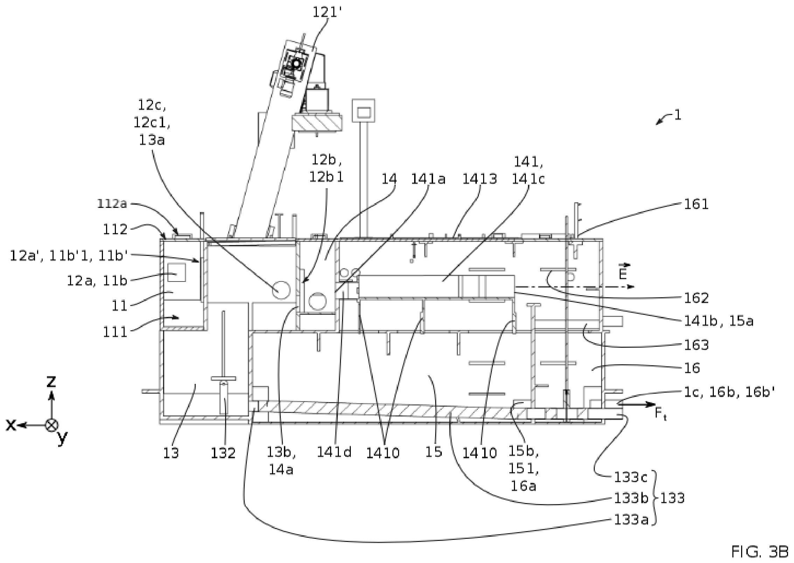

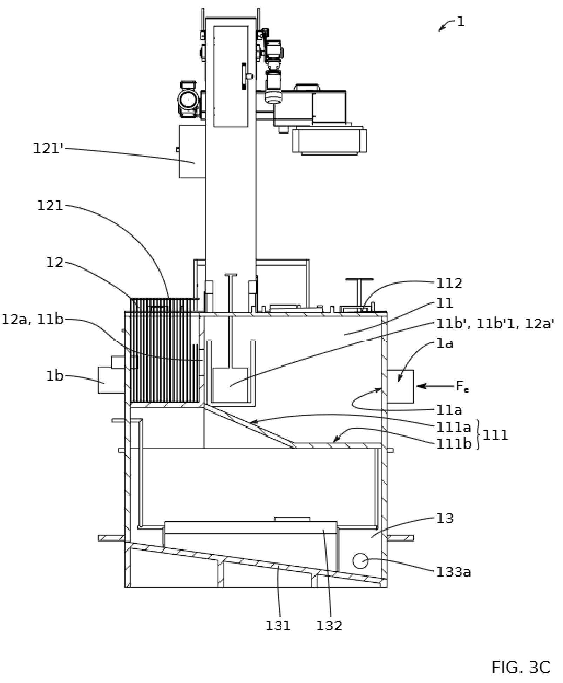

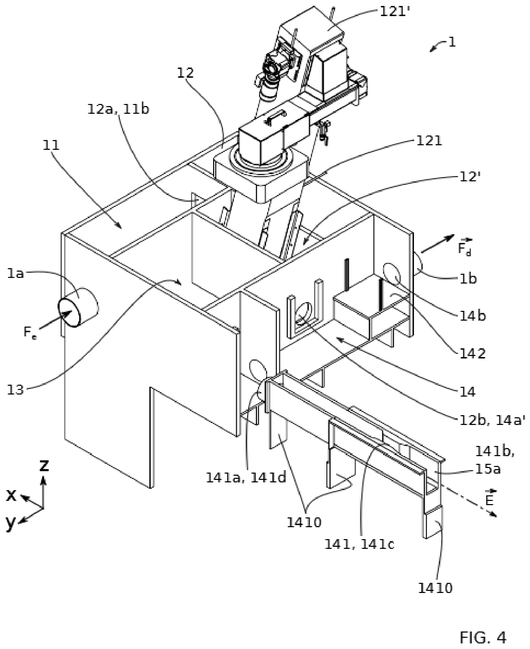

La présente invention se propose ainsi de faciliter le pré-traitement des eaux usées en amont des filtres végétalisés plantés. Un dispositif selon un mode de réalisation de l'invention va maintenant être décrit en référence aux figures 1A à 4.

### Structure extérieure du dispositif de traitement 1 :

Le dispositif de traitement 1 est destiné à dépolluer un flux F d'eaux usées, plus précisément il est destiné à réaliser un pré-traitement des eaux usées. On parle de pré-traitement dans le cadre d'un dispositif positionné en amont de filtres végétalisés plantés de macrophytes. Les filtres végétalisés plantés présentent une surface unitaire S2.

Le dispositif de traitement 1 selon l'invention comprend une cuve 1. La cuve 1 présente une enveloppe externe. Cette enveloppe externe peut être d'un seul tenant. Ainsi la cuve 1 peut être monobloc. La cuve 1 peut alors être déplacée et positionnée facilement dans un réseau de traitement des eaux usées. En effet lors de l'installation de la cuve 1, il n'est plus nécessaire de réaliser différent terrassement et aménagement comme dans l'art antérieur. Le dispositif de traitement 1 selon l'invention peut être installé facilement et ne nécessite qu'un seul emplacement. De plus cela permet de réduire les coûts d'installation d'une telle structure pour des communes n'ayant pas nécessairement un budget pour les installations suivant l'art antérieur.

Selon un exemple, la cuve 1 est parallélépipédique. La cuve 1 peut également être cylindrique. Ainsi, l'enveloppe externe de la cuve 1 peut être parallélépipédique ou cylindrique. La cuve 1 peut être en polyéthylène, en métal ou en fibre de verre. Ainsi la cuve 1 est conçue pour résister à la pression de l'eau qui est traitée dans cette dernière. La cuve 1 est également conçu pour résister aux forces mécaniques de pression de la terre sur cette dernière lorsque la cuve 1 est enterrée. Selon un exemple, la cuve 1 comprend au moins une plaque 112 positionnée sur la partie supérieure de l'enveloppe externe de la cuve 1. De préférence, la cuve 1 comprend plusieurs plaques 112. L'au moins une plaque 112 permet à un opérateur réalisant l'entretien de la cuve 1 d'accéder à l'intérieur de la cuve 1. De préférence, l'opérateur peut y accéder sans entrer dans la cuve 1.

Pour ce faire, l'au moins une plaque (ou caillebotis) 112 peut alors comprendre des poignées 112a configurée pour permettre à un opérateur de soulever l'au moins une plaque 112 seul. L'entretien de la cuve 1 est ainsi facilité et peut être réalisé par un seul opérateur.

L'enveloppe externe de la cuve 1 comprend au moins une entrée 1a d'eau usée. Cette entrée 1a est configurée pour se raccorder fluidiquement à au moins une canalisation. Le flux F d'eaux usées passant par l'entrée 1a de la cuve 1 est par la suite nommé flux entrant Fₑ.

L'enveloppe externe de la cuve 1 comprend également au moins une première sortie d'eau 1c. L'au moins une première sortie d'eau 1c est configurée pour permettre la sortie d'un flux dit traité Fₜ. Le flux traité Fₜ est issu d'au moins une partie du flux entrant Fₑ. Le flux traité Fₜ correspond à la partie du flux entrant après son traitement au sein de la cuve 1.

La cuve 1 comprend en outre à l'intérieur de l'enveloppe externe une pluralité 10 de compartiments. Les compartiments de la pluralité 10 communique fluidiquement entre eux. La pluralité 10 de compartiments est configurée pour traiter le flux entrant Fₑ d'eaux usées s'écoulant depuis l'au moins une entrée 1a jusqu'à l'au moins une première sortie d'eau 1c.

La pluralité 10 de compartiments va maintenant être décrites en suivant le flux entrant Fₑ pendant son traitement au sein de la cuve 1.

### La pluralité 10 de compartiments :

La cuve 1 comprend au moins un premier compartiment 11, 12, 12'. L'au moins un premier compartiment 11, 12, 12' peut être configuré pour, à la fois, collecter par gravité des éléments solides et pour retenir des déchets présents dans le flux entrant Fₑ. Pour ce faire l'au moins un premier compartiment 11, 12, 12' comprend un fond 111. Le fond 111 est dit fond de sur-profondeur 111. L'au moins un premier compartiment 11, 12, 12' comprend également au moins un dégrilleur 121, 121'. Dans la suite de la description, le fond de sur-profondeur 111 pourra être désigné comme une sur-profondeur 111.

Selon un exemple, l'au moins un premier compartiment 11, 12, 12' comprend un premier compartiment 11 également désigné premier sous-compartiment 11. Le premier sous-compartiment 11 peut être configuré pour collecter des éléments solides. Le premier sous-compartiment 11 peut comprendre une entrée 11a. L'entrée 11a du premier sous-compartiment 11 peut correspondre à l'entrée d'eau usée 1a de la cuve 1. Ainsi, le flux entrant Fₑ, entre dans le premier sous-compartiment 11 par l'entrée 11a.

Selon un exemple, le premier compartiment 11 comprend la sur-profondeur 111. La sur-profondeur 111 est configuré pour collecter par gravité au moins une partie des éléments solides présents dans le flux entrant Fₑ. La sur-profondeur 111 peut être un fond du premier compartiment 11 différent du fond de la cuve 1. La sur-profondeur 111 peut comprendre deux portions. La première portion de la sur-profondeur 111 peut être un plan incliné 111a et la deuxième portion peut être un plan horizontal 111b. Les éléments solides peuvent alors glisser par gravité du plan incliné 111a vers le plan horizontal 111b et s'accumuler sur le plan horizontal 111b. Un opérateur peut alors retirer les éléments solides présents dans le premier compartiment 11 en soulevant une plaque 112 présente au-dessus du premier compartiment 11. Le flux entrant Fₑ peut alors s'accumuler dans le premier compartiment 11. Le flux entrant Fₑ peut sortir du premier compartiment 11 soit par une sortie de premier compartiment 11b, soit par une sortie additionnelle du premier compartiment 11b'.

Selon un exemple, l'au moins un premier compartiment 11, 12, 12' comprend un deuxième compartiment 12 également désigné deuxième sous-compartiment 12. Le deuxième compartiment 12 peut être configuré pour retenir des déchets présents dans le flux entrant Fₑ. Le deuxième compartiment 12 comprend une entrée de deuxième compartiment 12a. L'entrée de deuxième compartiment 12a peut correspondre à la sortie de premier compartiment 11b. Ainsi le flux entrant Fₑ, entre dans le deuxième compartiment 12 par l'entrée 12a.

Selon un exemple, le deuxième compartiment comprend un dégrilleur 121. Le dégrilleur 121 peut être une grille positionnée de façon inclinée par rapport à l'horizontale. De préférence, la grille peut permettre de retenir des déchets présents dans le flux entrant Fₑ. Un opérateur peut par la suite manuellement retirer les déchets coincés par le dégrilleur 121 par le dessus de la cuve 1. Les déchets alors collectés tombent dans un panier d'égouttage, non représenté sur les figures. Le flux entrant Fₑ peut alors s'écouler dans le deuxième compartiment 12 jusqu'à une première sortie 12b de deuxième compartiment ou jusqu'à une deuxième sortie 12c de deuxième compartiment.

Selon un exemple, la première sortie 12b et la deuxième sortie 12c de deuxième compartiment 12 sont respectivement fermée par un deuxième 12b1 et un troisième 12c1 clapet. Les clapets peuvent être des martellières. Les deuxième 12b1 et troisième 12c1 clapet peuvent être ouvert et/ou fermé manuellement ou automatiquement si la station est reliée à un dispositif électrique. Si l'un parmi le deuxième 12b1 ou le troisième 12c1 clapet est ouvert alors l'autre parmi le deuxième 12b1 ou le troisième 12c1 clapet est fermé. Le deuxième 12b1 et le troisième 12c1 clapet peuvent ainsi permettre de diriger le flux entrant Fₑ vers un compartiment différent suivant le traitement à réaliser.

Selon un exemple, l'au moins un premier compartiment 11, 12, 12' comprend un deuxième compartiment additionnel 12'. Le deuxième compartiment additionnel 12' peut être configuré pour retenir des déchets présents dans le flux entrant Fₑ. Le deuxième compartiment additionnel 12' comprend une entrée de deuxième compartiment additionnel 12a'. L'entrée de deuxième compartiment additionnel 12a' peut correspondre à la sortie additionnelle de premier compartiment 11b'. Ainsi le flux entrant Fₑ, entre dans le deuxième compartiment additionnel 12' par l'entrée 12a'.

Selon un exemple, le deuxième compartiment additionnel 12' comprend un dégrilleur automatique 12'. Le deuxième compartiment additionnel 12' peut être configuré pour retenir des déchets présents dans le flux entrant Fₑ. Le deuxième compartiment additionnel 12' peut alors de manière automatique enlever une partie des déchets du flux entrant Fₑ. Pour ce faire, la cuve 1 peut être reliée à un dispositif électrique. Additionnellement, selon un exemple, la sortie additionnelle de premier compartiment 11b' comprend un premier clapet 11b'1. De manière analogue, l'entrée 12a' du deuxième compartiment additionnel peut comprendre le premier clapet 11b'1. Si la cuve 1 comprend un deuxième dégrilleur, dit dégrilleur automatique 121' fonctionnel alors le premier clapet 11b'1 pourra être ouvert et une portion du flux entrant Fₑ pourra passer par le deuxième compartiment additionnel 12'. Dans le cas contraire, tout le flux entrant Fₑ pourra passer par le deuxième compartiment 12. Les sorties du deuxième compartiments additionnel 12' peuvent alors être identiques aux première 12b et deuxième 12c sortie de deuxième compartiment 12.

La cuve 1 peut comprendre au moins un troisième compartiment 13. L'au moins un troisième compartiment est configuré pour retenir au moins une partie de graisses présentes dans le flux entrant Fₑ. Selon un exemple, l'au moins un troisième compartiment 13 peut additionnellement collecter par sédimentation des boues du flux entrant Fₑ. L'au moins un troisième compartiment 13 comprend une entrée 13a et une sortie 13b. L'entrée 13a de troisième compartiment 13 peut correspondre à la deuxième sortie 12c de deuxième compartiment.

Selon un mode de réalisation, le troisième clapet 12c1 est ouvert. Ainsi, le flux entrant Fₑ peut passer par la deuxième sortie 12c du deuxième compartiment pour aller dans l'au moins un troisième compartiment 13.

Selon un exemple, l'au moins un troisième compartiment 13 comprend un plancher incliné 131. Le plancher incliné 131 peut être destiné à collecter par sédimentation les boues provenant du flux entrant Fₑ. Les boues peuvent ainsi s'accumuler au point le plus bas du plan incliné 131. Selon un exemple, l'au moins un troisième compartiment 13 comprend un système d'évacuation des boues 133. Le système d'évacuation des boues 133 est configuré pour évacuer les boues en dehors de la cuve 1 vers des filtres végétalisés plantés. Le système d'évacuation des boues 133 comprend alors une entrée 133a positionnée au niveau du point le plus bas du plan incliné 131. Le système d'évacuation des boues 133 comprend un tuyau 133b qui est incliné par rapport à l'horizontal jusqu'à une sortie 133c configurée pour évacuer les boues hors de la cuve 1 par gravité. Le système d'évacuation des boues 133 peut être automatique ou manuel. Ainsi, le système d'évacuation des boues 133 peut comprendre au moins deux pompes.

Selon un exemple, l'au moins un troisième compartiment 13 comprend un dispositif de bullage 132. Le dispositif de bullage 132 peut être configuré pour introduire des bulles d'air dans le flux entrant Fₑ. Le dispositif de bullage 132 permet ainsi de mettre en suspension dans l'au moins un troisième compartiment une partie des graisses présentes dans le flux entrant Fₑ. Afin de fonctionner, le dispositif de bullage 132 peut alors être relié à un compresseur positionné en dehors de la cuve 1. Le compresseur peut selon un autre exemple être positionné dans la cuve 1.

Selon un exemple, l'au moins un troisième compartiment 13 ne comprend pas de dispositif de bullage 132. La graisse peut alors être mise en suspension dans l'au moins un troisième compartiment 13 par décantation. Le flux entrant Fₑ peut alors rester un moment définit dans le volume du au moins un troisième compartiment 13. Le moment défini peut être compris entre 5 et 20 minutes. De préférence, le moment défini est inférieur à 5 heures si le troisième compartiment 13 n'inclut pas de système d'aération.

Selon un exemple, la graisse accumulée en suspension peut être retirée par un opérateur en soulevant une plaque 112 positionnée au-dessus de l'au moins un compartiment 13.

Selon un exemple le flux entrant Fₑ, peut sortir du au moins un troisième compartiment 13 par la sortie 13b de troisième compartiment.

Selon un exemple, la cuve comprend un quatrième compartiment 14. Le quatrième compartiment peut être appelé dispositif de dérivation 14. Le dispositif de dérivation 14 peut être configuré pour permettre de prélever des échantillons d'eau dans le cadre de bilans réglementaires.

Selon un exemple, le dispositif de dérivation 14 comprend une première entrée 14a et une deuxième entrée 14a'. La première entrée 14a et la deuxième entrée 14a' de dispositif de dérivation 14 peuvent correspondre respectivement à la sortie 13b de troisième compartiment et à la première sortie 12b de deuxième compartiment. Cette dernière peut être fermée par un deuxième clapet 12b1 pour que le flux entrant Fₑ passe par le troisième compartiment 13. Selon un exemple, le dispositif de dérivation 14 comprend une deuxième sortie 1b dite de dérivation. Le dispositif de dérivation 14 peut être configuré pour permettre d'évacuer hors de la cuve 1 par l'au moins une sortie de dérivation 1b, tout ou au moins une partie, dite flux de dérivation F_{d} du flux entrant Fₑ. Plus précisément, lorsque le flux entrant Fₑ présente un débit dₑ supérieur à un débit nominal prédéfini d_{d}, une partie du flux entrant Fₑ est redirigé vers la sortie de dérivation 1b et devient le flux dérivé F_{d}. Le débit nominal prédéfini d_{d} peut être défini suivant les réglementations qui s'applique à la commune et peut être défini en fonction du nombre d'habitants de la commune. Le débit du flux dérivé F_{d} qui est évacué par la sortie de dérivation 1b est égal au débit du flux entrant Fe moins d_{d}. Le canal quant à lui accepte le flux d'eau traitée F_{T} dont le débit est d_{d}. Additionnellement, le dispositif de dérivation 14 peut comprendre un capteur 143. Le capteur 143 peut être configuré pour mesurer la quantité (volume ou débit) du flux dérivé F_{d}. Le dispositif de dérivation 14 peut également permettre d'évacuer hors de la cuve 1, par l'au moins une deuxième sortie 1b, une partie du flux entrant Fe, en cas de maintenance des compartiments situés en aval dans le sens du flux F.

Selon un exemple, le dispositif de dérivation 14 est configuré également pour laisser s'écouler au sein de la cuve 1 un flux dit flux traité Fₜ. Plus précisément le dispositif de dérivation 14, peut laisser s'écouler au sein de la cuve 1, en aval du dispositif de dérivation 14 et en direction de la première sortie d'eau 1c, un flux Ft lorsque le flux entrant Fe présente un débit dₑ inférieur au débit nominal prédéfini d_{d} dans le but qu'il soit traité. Le flux traité Fₜ peut alors correspondre à une portion ou à tout le flux entrant Fₑ qui est passé par au moins deux des trois compartiments précédemment cités. De préférence le flux traité Fₜ correspond à une portion du flux entrant Fₑ qui est passé par les trois compartiments précédemment cités. De préférence lorsque le flux entrant Fₑ présente un débit dₑ supérieur au débit nominal prédéfini d_{d}, la partie du flux entrant Fₑ qui n'est pas redirigée vers la sortie de dérivation 1b peut correspondre au flux traité Fₜ. Ainsi, le flux traité Fₜ peut correspondre au flux dont le débit est inférieur ou égal au débit normal prédéfinit d_{d}. Ceci est tout au moins valable en amont du compartiment de bâchée 15.

Afin de déterminer la quantité (volume ou débit) du flux traité Fₜ, la cuve 1 comprend en outre un dispositif de mesure 141. Plus précisément, le dispositif de mesure 141 est configuré pour mesurer un paramètre du flux traité Fₜ. Le paramètre du flux traité Fₜ peut être relatif à au moins l'un parmi un volume et un débit, une vitesse du flux traité Fₜ.

Pour ce faire le dispositif de mesure 141 peut comprendre un canal 141c. Le canal 141c peut s'étendre horizontalement. De préférence, le canal 141c présente une direction principale d'extension E. Le canal 141c est configuré pour canaliser le flux traité Fₜ. Le canal 141c peut être muni d'un capteur 143 de mesure dudit paramètre.

Selon un exemple, le canal 141c s'étend horizontalement entre une entrée 141a et une sortie 141b. De préférence l'entrée 141a est positionnée de sorte à recevoir le flux traité Fₜ provenant du dispositif de dérivation 14 ou du troisième compartiment 13. L'entrée 141a du dispositif de mesure 141 peut présenter une forme tubulaire permettant l'accroche d'une bague141d. La bague 141d peut être un raccord souple accompagné d'un collier de serrage. La bague 141d peut être configurée de sorte à connecter le compartiment de dérivation au canal 141c. La bague 141d peut ainsi être en élastomère EPDM. Cela permet de laisser la possibilité à la bague 141d de se déformer de sorte à permettre un réglage de l'horizontalité du canal 141c. L'entrée 141a peut présenter une obstruction de diamètre, selon la loi hauteur/débit du canal venturi, de sorte à ne laisser passer que le flux traité Fₜ dont le débit est inférieur au débit nominal prédéfinit d_{d}. Selon un exemple, si le flux entrant Fₑ présente un débit dₑ supérieur au débit nominal prédéfini d_{d}, l'entrée 141a ne permettra pas au flux de passer dans le canal 141c. Ainsi, le flux entrant Fₑ s'accumulera dans le dispositif de dérivation 14. Le flux entrant Fₑ pourra alors atteindre un seuil déversoir 142. Le seuil déversoir 142 étant configuré pour diriger le flux entrant Fₑ vers la sortie de dérivation 14b, 1b.

Selon un exemple, le canal 141c est situé, suivant une direction verticale Z, au-dessus d'au moins un desdits compartiments de la pluralité 10. Ainsi, le canal 141c est manuellement accessible depuis l'extérieur de l'enveloppe externe de la cuve 1. Plus précisément, il peut être accessible par une trappe 1413 portée sur l'enveloppe externe. De préférence, le canal 141c est positionné au-dessus d'un compartiment configuré pour stocker le flux traité Fₜ. Le canal 141c peut ainsi être positionné de façon suspendue au-dessus d'un compartiment de la cuve 1 tout en étant à l'intérieur de l'enveloppe externe de la cuve 1.

Selon un exemple, le canal 141c peut un premier canal dit canal venturi. Le canal 141c peut également comprendre un deuxième canal, dit canal d'approche. Le canal d'approche et le canal venturi étant assemblé entre eux. L'assemblage du canal d'approche et du canal venturi peut être réalisé par vissage. Ainsi, le canal 141c est d'un seul tenant. Le canal 141c peut alors être positionné facilement au sein de la cuve 1. Le capteur 143, peut alors être positionné au-dessus du canal d'approche ou du canal venturi du canal 141c.

Selon un exemple, le canal 141c comprend une portion dite venturi. Cette portion dite venturi ou canal venturi du canal 141c peut être configurée pour créer un effet venturi lors de l'écoulement du flux traité Fₜ dans le canal 141c. Selon un exemple, le capteur 143 du paramètre est situé au-dessus du canal 141c. Cela permet ainsi de déterminer par une règle mathématique la quantité du flux traité Fₜ.

Selon un exemple, le canal d'approche comprend une première extrémité et une deuxième extrémité. La deuxième extrémité du canal d'approche est opposée à la première extrémité. La première extrémité du canal d'approche peut alors être reliée fluidiquement au dispositif de dérivation 14. La deuxième extrémité peut être reliée fluidiquement au canal venturi. Le canal d'approche permet ainsi de réguler la quantité de flux entrant dans le canal venturi. Plus précisément, le dimensionnement du canal d'approche permet de limiter et de diriger une portion du flux, dite de dérivation vers une autre sortie.

Selon un exemple, la cuve 1 comprend au moins une patte 1410. De préférence, la cuve 1 comprend plusieurs pattes 1410. L'au moins une patte 1410 est de préférence fixée à la cuve 1. Le canal 141c peut ainsi être fixé sur au moins une patte 1410. De préférence, le canal 141c peut être fixé à plusieurs pattes 1410. Afin d'assurer le positionnement du canal 141c, l'au moins une patte 1410 peut s'étendre perpendiculairement à la direction principale d'extension E du canal 141c. Le canal 141c peut être fixé à plusieurs pattes réparties horizontalement sur la direction d'extension principale E du canal 141c. L'au moins une patte 1410 peut être réglable en hauteur de sorte à permettre l'inclinaison du canal 141c, de préférence du canal venturi, par rapport à un plan horizontal. Cela permet ainsi d'assurer l'horizontalité du canal venturi. De plus, cela permet de s'assurer, par la suite, que la quantité de flux traité mesurée au niveau du canal 141c est correct.

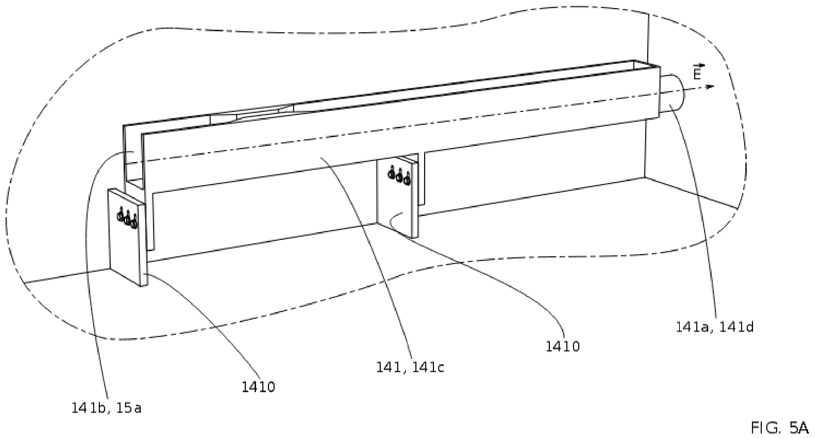

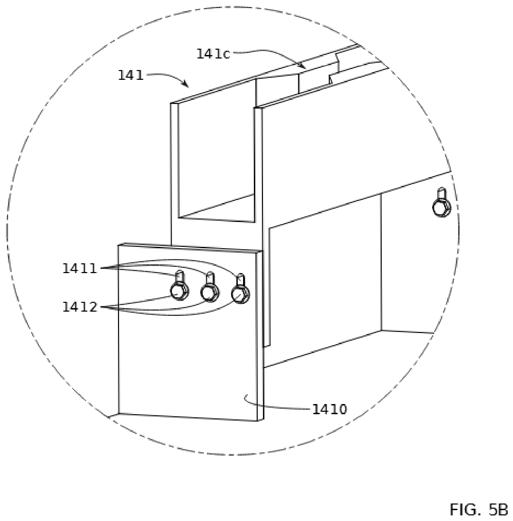

Selon un exemple, le dispositif de mesure 141 comprend au moins un système de réglage 1411, 1412. Le système de réglage va maintenant être décrit en référence aux figures 5A et 5B. Le système de réglage 141 peut être configuré pour régler l'horizontalité du canal 141c. De manière similaire, le système de réglage 1411, 1412 peut permettre de faire un réglage de l'inclinaison du canal 141c par rapport à un plan horizontal.

Selon un exemple, le système de réglage 1411, 1412 peut comprendre des trous oblongs 1411. Le système de réglage 1411, 1412 peut également comprendre des écrous 1412. Selon un exemple, l'un parmi le dispositif de mesure 141 et l'au moins une patte 1410 comprend les trous oblongs 1411 et l'autre parmi l'au moins une patte 1410 et le dispositif de mesure 141 comprend les écrous. Ainsi, le système de réglage 1411, 1412 permet de régler l'horizontalité du canal 141c du dispositif de mesure 141 en serrant les écrous dans les trous oblongs.

De manière analogue, on peut dire que l'au moins une patte 1410 comprend une première portion solidaire de la cuve 1. Plus précisément, la première portion est solidaire d'une enveloppe de la cuve 1. L'enveloppe de la cuve 1 peut ainsi faire office de bâti. L'au moins une patte 1410 peut comprendre également une deuxième portion solidaire du canal 141c. La deuxième portion peut alors être configurée pour être fixée à la première portion. La position de la première portion par rapport à la deuxième portion peut être réglable, par exemple par l'intermédiaire des trous oblong (1411) portés par l'une parmi la première ou la deuxième portion et de boulons (1412). Le canal (141c) est alors de préférence configuré pour être fixé sur au moins une patte (1410).

Selon un exemple, le réglage de l'inclinaison du canal peut être réalisé par un opérateur. De préférence, l'opérateur peut réaliser ce réglage manuellement. L'opérateur peut également réaliser ce réglage à l'aide d'un outil. Avantageusement, le système de réglage 1411, 1412 est accessible par un opérateur situé à l'extérieur de la cuve 1. Pour ce faire l'opérateur peut soulever une trappe 1413 situé verticalement au-dessus du dispositif de mesure 141.

Selon un exemple, le dispositif de mesure 141 comprend une interface de lecture de valeurs mesurées par le capteur 143. Ainsi l'opérateur peut facilement obtenir l'information sur la quantité (volume ou débit) du flux traité Fₜ par le dispositif 1.

La cuve 1 comprend également un cinquième compartiment 15. Le cinquième compartiment 15 est un compartiment dit de bâchée 15. Le compartiment de bâchée 15 est configuré pour stocker une partie du flux traité Fₜ. Plus précisément, le compartiment de bâchée est configuré pour stocker un volume V₁ de flux traité Fₜ. Le volume V₁ de compartiment de bâchée peut être compris entre 1,5 et 11 m³, de préférence il peut être compris entre 2 et 8 m³.

Selon un exemple, le compartiment de bâchée 15 comprend une entrée 15a. L'entrée 15a de compartiment de bâchée 15 correspond à la sortie 141b du dispositif de mesure 141. Ainsi, le compartiment de bâchée 15 peut contenir le flux traité Fₜ dont le débit a été inférieur au débit nominal prédéfinit d_{d}.

Selon un exemple, le compartiment de bâchée 15 peut contenir le flux traité Fₜ avant son évacuation vers un sixième compartiment. Pour ce faire le compartiment de bâchée comprend une sortie 15b. La sortie 15b de compartiment de bâchée 15 peut comprendre un dispositif de chasse 151. Le dispositif de chasse 151 peut être configuré pour admettre une position fermée et une position ouverte. En position fermée, le dispositif de chasse 151 peut être configuré pour stocker le flux traité Fₜ dans le compartiment de bâchée 15. Le dispositif de chasse 151 peut ainsi être configuré pour retenir le volume V₁ de compartiment de bâchée dans le compartiment de bâchée 15. En position ouverte, le dispositif de chasse 151 peut être configuré pour relâcher le flux traité Fₜ hors du compartiment de bâchée 15 en direction de la première sortie 1c. Plus précisément, le dispositif de chasse 151 est configuré pour permettre l'évacuation d'une bâchée formée d'une portion au moins du flux traité Fₜ précédemment stocké. Le dispositif de chasse 151 peut également être configuré pour évacuer en une seule fois un volume défini V_{d} du flux traité Fₜ présent dans le compartiment de bâchée 15. Le volume défini V_{d} peut être inférieur ou égal au volume V₁ de compartiment de bâchée. De préférence, le volume défini V_{d} est inférieur au volume V₁ de compartiment de bâchée. Le volume défini V_{d} est configuré de sorte à être le volume nécessaire pour un arrosage uniforme des filtres plantés végétalisés 2.

Selon un autre exemple, le compartiment de bâchée 15 peut contenir le flux traité Fₜ avant son évacuation hors de la cuve 1. Pour ce faire le compartiment de bâchée 15 comprend une pluralité de sortie 15b. De préférence, le compartiment de bâchée 15 comprend trois sorties 15b. Les sorties 15b de compartiment de bâchée 15 peuvent comprendre chacune un dispositif de chasse 151. Chaque dispositif de chasse 151 peut être configuré pour admettre une position fermée et une position ouverte. En position fermée, chaque dispositif de chasse 151 peut être configuré pour stocker le flux traité Fₜ dans le compartiment de bâchée 15. Chaque dispositif de chasse 151 peut ainsi être configuré pour retenir le premier volume V1 de compartiment de bâchée dans le compartiment de bâchée 15. En position ouverte, chaque dispositif de chasse 151 peut être configuré pour relâcher le flux traité Fₜ hors du compartiment de bâchée 15 en direction de la première sortie 1c. De préférence, la pluralité de dispositif de chasse 151 est en position ouverte ou fermée de façon simultanée.

Selon un exemple, le dispositif de chasse 151 et la première sortie 1c sont configurés de sorte que dans la position ouverte le flux traité Fₜ soit évacué hors de la cuve 1 avec un débit, dit débit de bâchée d_{b}. Le débit de bâchée peut être tel que d_{b} ≥ X * S2. X est compris entre 0,5 et 1, avec X en m3/h. S2 correspond à la surface unitaire en m² des filtres végétalisés plantés.

Selon un exemple, un débit d_{Ft} du flux traité Fₜ au sein de la cuve 1 n'est pas constant. De préférence, ce débit peut être constant en aval de l'éventuel dispositif de dérivation. De préférence, ce débit peut être constant en amont du compartiment de bâchée 15. En revanche, en fonction de la position du dispositif de chasse 151, le débit en sortie du compartiment de bâchée 15 et donc dans la première sortie 1c varie fortement. En amont du compartiment de bâchée 15, le débit d_{Ft} du flux traité est inférieur ou égal, de préférence inférieur, au débit nominal prédéfini d_{d}. Lorsque le dispositif 1 est alimentée avec un débit entrant dₑ supérieur ou égale au débit nominal prédéfini d_{d}, alors le débit d_{Ft} de flux traité est égal au débit nominal prédéterminé d_{d}. De même, lorsque le dispositif de chasse 151 est en position fermée, le débit d_{Ft} dans le compartiment de bâchée 15 est de préférence nul.

Selon un exemple, le dispositif de chasse 151 est configuré pour évacuer automatiquement le flux traité du compartiment de bâchée 15. Par exemple le dispositif de chasse 151 est configuré pour évacuer automatiquement le flux traité du compartiment de bâchée 15 lorsque le volume de flux traité présent dans le compartiment de bâchée 15 atteint le volume défini V_{d}. Pour ce faire le dispositif de chasse 151 peut comprendre un flotteur. Le flotteur peut être configuré pour atteindre une hauteur seuil. La hauteur seuil peut alors correspondre à la hauteur atteinte lorsque le volume de flux traité atteint le volume défini V_{d} dans le compartiment de bâchée 15.

Selon un mode de réalisation, non représenté sur les figures, la sortie 15b de compartiment de bâchée 15 peut correspondre à une première sortie 1c de la cuve 1.

Selon un autre mode de réalisation, la cuve comprend un sixième compartiment 16. Selon un exemple, le sixième compartiment peut alors comprendre une entrée 16a de sixième compartiment 16. L'entrée 16a de sixième compartiment 16 peut ainsi correspondre à la sortie 15b de compartiment de bâchée 15. Le sixième compartiment 16 peut comprendre au moins une sortie 16b. De préférence, le sixième compartiment 16 peut comprendre autant de sortie 16b que de filtres végétalisés plantés 2. Ainsi, l'au moins une sortie 16b de sixième compartiment 16 peut correspondre à la première sortie 1c de la cuve 1.

Selon un exemple, chacune des sorties 16b du sixième compartiment 16 comprend des clapets ou martelière de sorties 16b'. Les clapets de sorties 16b' peuvent être positionnés soit en position fermée soit en position ouverte. Au moins un des clapets est toujours en position ouverte. Les clapets de sorties 16b' peuvent s'ouvrir ou se fermer manuellement ou automatiquement. Au moins une partie du volume V₁ du compartiment de bâchée (ou l'intégralité du volume de bâchée) de flux traité Fₜ peut alors s'évacuer en une seule fois de la cuve 1 par la première sortie 1c pour atteindre les filtres plantés végétalisés 2.

Selon un exemple, le sixième compartiment 16 peut comprendre une plaque supérieure d'entretien 161. La plaque supérieure d'entretien 161 peut être positionné sur l'enveloppe externe supérieure de la cuve 1. La plaque supérieure d'entretien 161 peut permettre à un opérateur d'entrer à l'intérieur du sixième compartiment 16 de la cuve 1. Afin de faciliter l'accès à l'opérateur, le sixième compartiment peut comprendre une échelle 162.

Selon un exemple, le sixième compartiment 16 comprend des éléments de renforts 163. Les éléments de renforts 163 peuvent être configurés de sorte à renforcer le sixième compartiment 16. Plus précisément, les éléments de renforts 163 peuvent permettre de renforcer les parois du sixième compartiment 16 pour supporter la pression de l'eau et celle du remblai.

Comme cela ressort des paragraphes ci-dessus et des figures, le premier compartiment alimente le deuxième compartiment. Le deuxième compartiment alimente le troisième compartiment. Le troisième compartiment alimente le dispositif de dérivation. Le dispositif de dérivation alimente le cinquième compartiment. Le cinquième compartiment alimente le sixième compartiment. Comme cela ressort des paragraphes ci-dessus, tous les compartiments ne sont pas indispensables même s'ils interagissent mutuellement pour un traitement amélioré. En particulier, les deuxième, troisième et sixième compartiments sont uniquement optionnels.

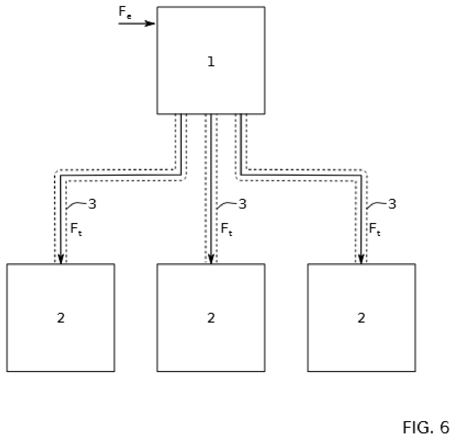

Comme décrit précédemment, le dispositif de traitement 1 est configuré pour s'intégrer à un ensemble de dépollution d'eaux usées. Cet ensemble va être décrit dans la suite de cette description en référence à la figure 6.

Selon un exemple, l'ensemble de dépollution d'eaux usées comprend le dispositif de traitement 1. L'ensemble de dépollution peut également comprendre des canalisations ou rampes d'aspersion 3. L'ensemble de dépollution peut comprendre ensuite un système de filtres végétalisés plantés 2 dans un terrain.

Selon un exemple, le flux entrant Fₑ, entre dans le dispositif de traitement 1 de sorte à être traité ou plus précisément prétraité. Le flux traité Fₜ est évacué du dispositif de traitement 1 vers les canalisations 3. Les canalisations peuvent être alors configurés pour guider le flux traité Fₜ en sortie du dispositif 1 jusqu'au système de filtres végétalisés plantés 2.

Selon un exemple, le système de filtres végétalisés plantés 2 est configuré pour filtrer le flux traité Fₜ. Le système de filtres végétalisés plantés 2 pourra alors permettre l'absorption du flux traité par le terrain.

L'invention permet ainsi d'avoir un dispositif de pré-traitement des eaux usées d'un seul tenant. De ce fait l'installation ainsi que l'utilisation d'un tel dispositif est simplifié. De plus, cela permet de réduire le coût d'un ensemble comprenant le dispositif et permettre l'accès à un ensemble plus responsable de l'environnement. Le dispositif permet également de répondre aux exigences réglementaires telle que la mesure du débit et du flux traité et/ou dérivé facilement.

L'invention n'est pas limitée aux modes de réalisations précédemment décrits et s'étend à tous les modes de réalisation couverts par l'invention.

### REFERENCES NUMERIQUES

1 : Dispositif de traitement / cuve
1a : entrée d'eau usée de la cuve
1b : deuxième sortie dérivée d'eau usée
1c : première sortie d'eau usée vers les filtres végétalisés plantés
10 : pluralité de compartiments
11 : premier compartiment
11a : entrée premier compartiment
11b : sortie premier compartiment
11b' : sortie additionnelle premier compartiment
11b'1 : premier clapet
111 : Sur-profondeur premier compartiment
111a : plan incliné
111b : plan horizontal112 : plaque supérieure
112a : poignées
12 : deuxième compartiment
12a : entrée deuxième compartiment
12b : première sortie deuxième compartiment
12b1 : deuxième clapet
12c : deuxième sortie deuxième compartiment
12c1 : troisième clapet
121 : dégrilleur
12' : deuxième compartiment additionnel
12a' : entrée deuxième compartiment additionnel
121' : dégrilleur automatique
13 : troisième compartiment
13a : entrée troisième compartiment
13b : sortie troisième compartiment
131 : plancher incliné troisième compartiment
132 : dispositif de bullage
133 : système d'évacuation des boues
133a : entrée système évacuation des boues
133b : tuyau évacuation des boues
133c : sortie évacuation des boues
14 : dispositif de dérivation et de prélèvement d'échantillon
14a : première entrée dispositif de dérivation
14a' : deuxième entrée dispositif de dérivation
14b : sortie dispositif de dérivation
141 : dispositif de mesure141a : entrée du dispositif de mesure
141b : sortie du dispositif de mesure
141c : canal du dispositif de mesure
141d : bague
1410 : patte
1411 : système de réglage / trous oblongs
1412 : écrous
1413 : trappe
142 : seuil déversoir
143 : capteur
15 : cinquième compartiment/compartiment de bâchée
15a : entrée cinquième compartiment
15b : sortie cinquième compartiment
151 : dispositif de chasse
16 : sixième compartiment
16a : entrée sixième compartiment
16b : sorties sixième compartiment
16b' : clapets de sortie
161 : plaque supérieure d'entretien
162 : échelle
163 : éléments de renforts
F : flux d'eaux usées
Fₑ : flux entrant
F_{d} : flux dérivé
Fₜ : flux traité
E : direction principale d'extension du canal
dₑ : débit horaire du flux d'eaux usées
d_{d} : débit horaire nominal prédéfini
d_{b} : débit horaire de bâchée
2 : filtres végétalisés plantés
3 : Canalisations et réseau d'alimentation/d'aspersion
S2 : surface unitaire filtres végétalisés plantés en m2
V₁ : Volume du compartiment de bâchée
V_{d} : Volume défini

## Revendications

1. Dispositif de traitement (1) destiné à dépolluer un flux (F) d'eaux usées en amont de filtres végétalisés plantés de macrophytes présentant une surface unitaire (S2), comprenant une cuve (1) **caractérisé en ce que** la cuve (1) présente une enveloppe externe et comprend :
• au moins une entrée (1a) d'eau usée configurée pour se raccorder fluidiquement à au moins une canalisation de sorte à permettre une entrée d'un flux entrant (Fₑ) d'eaux usées dans la cuve (1),
• au moins une première sortie d'eau (1c), configurée pour permettre la sortie d'un flux, dit traité (Fₜ), issu d'au moins une partie du flux entrant (Fₑ) après son traitement au sein de la cuve (1),
la cuve (1) comprenant en outre les éléments suivants situés à l'intérieur de l'enveloppe externe :
• une pluralité (10) de compartiments communiquant fluidiquement entre eux et configurés pour traiter le flux entrant (Fₑ) d'eaux usées, la pluralité (10) de compartiments comprenant au moins :
∘ au moins un premier compartiment (11, 12, 12') :
• comprenant un fond, dit fond de sur-profondeur (111) configurée pour collecter par gravité au moins une partie d'éléments solides présents dans le flux entrant (Fₑ),
• comprenant au moins un dégrilleur (121, 121') configuré pour retenir des déchets présents dans le flux entrant (Fₑ),
∘ un dispositif de dérivation (14) comprenant une deuxième sortie (1b), dite de dérivation, configuré de sorte à :
• permettre d'évacuer hors de la cuve (1), par l'au moins une deuxième sortie (1b), une partie du flux entrant (Fₑ), dite flux de dérivation (F_{d}), lorsque le flux entrant (Fₑ) présente un débit (dₑ) supérieur à un débit nominal prédéfini (d_{d}), et pour
• laisser s'écouler au sein de la cuve (1), en aval du dispositif de dérivation (14) un flux, dit flux traité (Fₜ) dont le débit est inférieur ou égal au débit normal prédéfinit (d_{d}),
∘ un cinquième compartiment (15), dit compartiment de bâchée, configuré pour recevoir le flux traité (Fₜ) provenant du dispositif de dérivation (14) et pour stocker une partie du flux traité (Ft), le cinquième compartiment (15) et comprenant au moins un dispositif de chasse (151) configuré de sorte à permettre l'évacuation hors de la cuve (1) au travers de l'au moins une première sortie (1c) d'une bâchée formée d'une portion au moins du flux traité (Fₜ) précédemment stocké dans le compartiment de bâchée,
• un dispositif de mesure (141) d'un paramètre du flux traité (Ft), le paramètre étant relatif à au moins l'un parmi un volume, un débit et une vitesse du flux traité (Ft),
le dispositif de mesure (141) comprenant un canal (141c) présentant une direction principale d'extension (E) s'étendant horizontalement et configuré pour canaliser le flux traité (Ft), le canal (141c) étant muni d'un capteur (143) de mesure dudit paramètre,
le canal (141c) étant verticalement situé au-dessus d'au moins l'un desdits compartiments et de sorte à être manuellement accessible depuis l'extérieur de l'enveloppe externe au travers d'une trappe (1413) portée par l'enveloppe externe.

2. Dispositif (1) selon la revendication précédente dans lequel, le canal (141c) comprend un premier canal dit canal venturi, le canal venturi étant dimensionné pour générer un effet venturi sur le flux traité (Fₜ).

3. Dispositif (1) selon la revendication précédente dans lequel le canal (141c) comprend un deuxième canal dit canal d'approche, le canal d'approche comprenant une première extrémité et une deuxième extrémité, opposée à la première extrémité, la première extrémité étant reliée fluidiquement au dispositif de dérivation (14) et la deuxième extrémité étant reliée fluidiquement au canal venturi.

4. Dispositif (1) selon l'une quelconques des revendications précédentes dans lequel, le dispositif de mesure (141) comprend au moins un système de réglage (1411, 1412) configuré pour permettre un réglage de l'inclinaison du canal (141c) par rapport à un plan horizontal.

5. Dispositif (1) selon la revendication précédente dans lequel, le système de réglage (1411, 1412) est configuré pour permettre un réglage par un opérateur, manuellement ou avec un outil manipulé par l'opérateur.

6. Dispositif (1) selon l'une quelconque des deux revendications précédentes dans lequel, le système de réglage (1411, 1412) est accessible par un opérateur situé à l'extérieur de la cuve (1), de préférence à l'extérieur de l'enveloppe externe.

7. Dispositif (1) selon l'une quelconque des revendications précédentes dans lequel, la cuve (1) comprend au moins une patte (1410) fixée à la cuve, le canal (141c) étant configuré pour être fixé sur au moins une patte (1410), l'au moins une patte étant réglable en hauteur de sorte à permettre une inclinaison du canal venturi par rapport à un plan horizontal et optionnellement dans lequel, l'au moins une patte (1410) comprend une première portion solidaire de la cuve (1) et une deuxième portion solidaire du canal (141c) et configurée pour être fixée à la première portion, la position de la première portion par rapport à la deuxième portion étant réglable, par exemple par l'intermédiaire de trous oblong (1411) portés par l'une parmi la première ou la deuxième portions et de boulons (1412), le canal (141c) étant de préférence configuré pour être fixé sur au moins une patte (1410).

8. Dispositif (1) selon l'une quelconque des revendications précédentes dans lequel, le dispositif de mesure (141) comprend une interface de lecture de valeurs mesurées par le capteur (143) et optionnellement dans lequel l'interface de lecture est positionnée de sorte à être lisible par un opérateur situé à l'extérieur de l'enveloppe externe, de préférence sans avoir à soulever de trappe (1413) portée par l'enveloppe externe.

9. Dispositif (1) selon l'une quelconque des revendications précédentes dans lequel, le canal (141c) du dispositif de mesure (141) comprend une portion, dite venturi, configurée pour créer un effet venturi lors de l'écoulement du flux traité (Ft) dans le canal (141c).

10. Dispositif (1) selon l'une quelconque des revendications précédentes dans lequel, le dispositif de chasse (151) est configuré pour admettre :
• une position fermée pour stocker le flux traité (Ft) dans le compartiment de bâchée (15),
• une position ouverte pour relâcher le flux traité (Fₜ) hors du compartiment de bâchée (15) en direction de la première sortie (1c),
le dispositif de chasse (151) et la première sortie (1c) étant configurés de sorte que dans la position ouverte le flux traité (Ft) soit évacué hors de la cuve (1) avec un débit, dit de bâchée, d_{b} tel que d_{b} ≥ X * S2, avec X ≥ 0,5 , de préférence X≤1.

11. Dispositif (1) selon l'une quelconque des revendications précédentes dans lequel, le dispositif (1) comprend au moins un troisième compartiment (13) configuré pour retenir au moins une partie de graisses présentes dans le flux entrant (Fe) et optionnellement pour collecter par sédimentation des boues présentes dans le flux entrant (Fe) et optionnellement dans lequel, l'au moins un troisième compartiment (13) comprend un dispositif de bullage (132) configuré pour introduire des bulles d'air dans le flux entrant (Fₑ) de sorte à mettre en suspension dans l'au moins un troisième compartiment une partie de graisses présentes dans le flux entrant (Fₑ).

12. Dispositif (1) selon l'une quelconque des revendications précédentes dans lequel, l'au moins un premier compartiment (11) comprend un deuxième compartiment (12) comprenant au moins un dégrilleur (121) configuré pour retenir des déchets présents dans le flux entrant (Fₑ).

13. Dispositif (1) selon l'une quelconque des revendications précédentes dans lequel, l'au moins un premier compartiment (11) comprend un deuxième compartiment additionnel (12') comprenant au moins un deuxième dégrilleur (121'), de préférence automatique, configuré pour retenir des déchets présents dans le flux entrant (Fₑ).

14. Ensemble de dépollution d'eaux usées, comprenant un dispositif de traitement (1) selon l'une quelconque des revendications précédentes, des canalisations, par exemple formant un réseau d'alimentation (3) et un système de filtres végétalisés plantés (2) dans un terrain, les canalisations étant configurés pour guider le flux traité (Ft) en sortie du dispositif (1) jusqu'au système de filtres végétalisés plantés (2).

15. Ensemble selon la revendication précédente, dans lequel le compartiment de bâchée (15), la première sortie (1c), les canalisations (3) et le système de filtres végétalisés plantés (2) sont configurés de sorte que lors de l'ouverture du dispositif de chasse (151) le volume d'eau contenu dans le compartiment de bâchée (15) se répartisse sur au moins 70% et de préférence sur au moins 90% du système de filtres végétalisés plantés (2) et optionnellement dans lequel le dispositif de traitement (1), les canalisations (3) et le système de filtres végétalisés plantés (2) sont dimensionnés pour filtrer le flux traité (Fₜ) et pour que le système de filtres végétalisés plantés (2) permette entièrement son absorption par le terrain.
